# EUROPÄISCHE PATENTSCHRIFT

(11) **EP 2 926 542 B1**
(45) Veröffentlichungstag und Bekanntmachung des Hinweises auf die Patenterteilung: **15.07.2020**
(21) Anmeldenummer: 13802295.9
(22) Anmeldetag: 27.11.2013
(51) Int. Cl.: H04N 1/32

(54) **VERFAHREN ZUR AUTHENTIKATION DIGITALER MULTIMEDIADATEN**
METHOD FOR AUTHENTICATING DIGITAL MEDIA
PROCEDE D'AUTHENTIFICATION DE SUPPORTS NUMERIQUES

(30) Priorität: 29.11.2012 DE 102012111565; 27.02.2013 DE 102013101946
(43) Veröffentlichungstag der Anmeldung: 07.10.2015
(73) Patentinhaber: dence GmbH, 01099 Dresden (DE)
(72) Erfinder: GLOE, Thomas, 01159 Dresden (DE)
(74) Vertreter: Lippert Stachow Patentanwälte Rechtsanwälte Partnerschaft mbB
(86) Internationale Anmeldenummer: PCT/EP2013/074856
(87) Internationale Veröffentlichungsnummer: WO 2014/083053

(56) Entgegenhaltungen:
- ERIC KEE ET AL: "Digital Image Authentication From JPEG Headers", IEEE TRANSACTIONS ON INFORMATION FORENSICS AND SECURITY, IEEE, PISCATAWAY, NJ, US, Bd. 6, Nr. 3, 1. September 2011 (2011-09-01), Seiten 1066-1075, XP011349880, ISSN: 1556-6013, DOI: 10.1109/TIFS.2011.2128309
- Special Agent ET AL: "Using Extended File Information (EXIF) File Headers in Digital Evidence Analysis", International Journal of Digital Evidence Winter, 1. Januar 2004 (2004-01-01), XP55103401, Gefunden im Internet: URL:http://www.digital4nzics.com/Student Library/Using Extended File Information (EXIF) File Headers in Digital Evidence Analysis.pdf [gefunden am 2014-02-20]

## Beschreibung

Die Erfindung betrifft ein Verfahren zur Authentikation digitaler Multimediadaten, bei welchem ein Vergleich der Multimediadaten mit einem vorgegebenen Merkmal erfolgt.

Unter dem Begriff der Authentikation versteht man die Aufgabenstellung, Personen, Daten oder Nachrichten als "echt" auszuweisen, also beispielsweise eine Identität zweifelsfrei bestimmen zu können oder einen Nachweis der Echtheit eines Dokuments zu erbringen.

Mittels Methoden der digitalen Multimediaforensik ist eine Überprüfung der Authentizität von Multimediainhalten allein auf Basis der vorliegenden Daten möglich. Anders als bei digitalen Wasserzeichen und digitalen Signaturverfahren ist es nicht notwendig, Mediendaten im Vorfeld zu kennzeichnen oder Zusatzdaten zu sichern, um zu einem späteren Zeitpunkt die Authentizität überprüfen zu können.

Bisherige Ansätze der digitalen Multimediaforensik fokussieren sich meist auf die Analyse von statistischen Besonderheiten (Spuren) in den Mediendaten, die durch Fertigungsfehler oder nachträgliche Verarbeitungsschritte hinzugefügt wurden.

Alternativ hierzu hat die Arbeitsgruppe von Hany Farid die Analyse von JPEG Quantisierungstabellen und die Erfassung der Anzahl von Metadateneinträgen vorgeschlagen. Siehe hierzu H. Farid. Digital Image Ballistics from JPEG Quantization: A Followup Study. Techn. Ber. TR2008-638. Hanover, NH, USA: Department of Computer Science, Dartmouth College, 2008, E. Kee, M. K. Johnson und H. Farid. "Digital Image Authentication from JPEG Headers". In: IEEE Transactions on Information Forensics and Security 6.3 (2011), S. 1066 - 1075. doi: 10.1109/TIFS.2011.2128309.

Weiterhin existiert ein Ansatz zur Schätzung und Nutzung der kameraspezifischen Bildverarbeitungshistorie von Vorschaubildern in E. Kee und H. Farid. "Digital Image Authentication from Thumbnails". In: Proceedings of SPIE: Media Forensics and Security II. Hrsg. von N. D. Memon, J. Dittmann, A. M. Alattar und E. J. Delp III. Bd. 7541. 2010, S.75410E. doi: 10.1117/12.838834.

Die bekannten Lösungen lassen sich mit existierender Software umgehen und sind insofern aus Sicherheitssicht nur bedingt einsetzbar.

Mittels geeigneter Tools wie beispielsweise dem "ExifTool" können Meta-Daten einer Bilddatei nicht nur gelesen, sondern auch verändert werden. Dieses Tool kann in den von der bildaufzeichnenden Kamera gelieferten Metadaten beispielsweise das Aufnahmedatum, Aufnahmezeit, Daten zum Bildformat, Kommentare und andere Einträge verändern und somit einen Nachweis der Echtheit des Bildes erschweren oder unmöglich machen. In dieser Beschreibung werden die Metadaten auch als Zusatzdaten bezeichnet.

Der Erfindung liegt somit die Aufgabe zugrunde, ein Verfahren zur Authentikation digitaler Multimediadaten anzugeben, womit eine vereinfachte Überprüfung der Echtheit und somit der Vertrauenswürdigkeit von Multimediadaten erreicht und der Aufwand zur Prüfung minimiert werden soll.

Mittels dieser Verbesserung erhalten Forensiker damit ein Werkzeug, um die Authentizität von Multimediadaten grundlegend zu prüfen.

Gemäß der Erfindung wird die Aufgabe bei einem Verfahren zur Authentikation digitaler Multimediadaten der eingangs genannten Art dadurch gelöst, dass ein Merkmal für den Vergleich aus einer bei der Erzeugung der Multimediadatei zusätzlich gespeicherten Information abgeleitet wird und dass die Authentikation unter Verwendung dieses abgeleiteten Merkmals erfolgt.

Bei der Erstellung von Multimediadateien wie beispielsweise Bildern werden neben den reinen Bildinformationen auch zusätzliche Informationen zur Bilddatei erzeugt und mit dieser gemeinsam, als sogenannte Zusatzdaten, abgespeichert. Diese Erzeugung von Zusatzdaten ist unabhängig von einem genutzten Format, Standard, einem Aufzeichnungsgerät oder einer Software. Derartige Informationen können beispielsweise Aufzeichnungsdatum, Zeit, Information zur Auflösung eines Fotos, Informationen zur Blende oder Belichtungszeit oder ein Kommentar sein.

Die vorliegende Erfindung greift auf diese Zusatzdaten der Multimediadatei zu und nutzt somit Unterschiede bei der Umsetzung oder Implementierung beispielsweise von Dateiformaten oder Standards zur Bildaufzeichnung wie JPEG, GIF, TIFF, PNG oder dem Exif-Standard für Metadaten.

Bei der Umsetzung dieser Formate oder Standards werden meist einige Merkmale der Zusatzdaten durch Entwickler oder Hersteller von Aufzeichnungsgeräten individuell beeinflusst oder gar weggelassen und stellen somit mögliche Unterscheidungsmerkmale zu Multimediadateien dar, welche mit Aufzeichnungsgeräten anderer Hersteller erstellt wurden.

Die Analyse von kamera- und softwarespezifischen Datenstrukturen von Multimediadaten wurde in keinem bisher aus dem Stand der Technik bekannten Verfahren zur Erkennung von Manipulationen oder zur Erkennung des Ursprungs angewendet.

Die Erfindung beschreibt ein Verfahren zur Authentikation digitaler Multimediadaten allein auf Basis einer vorliegenden Datei. Dabei werden Unterschiede in der Hardwareimplementierung von Digitalkameras und Bildverarbeitungssoftware ausgewertet, welche Rückschlüsse auf die Unverändertheit und den Ursprung einer Multimediadatei erlauben.

Die Erfindung ermöglicht somit Ermittlern eine sehr schnelle Prüfung der Authentizität digitaler Multimediadaten. Die Analyse basiert allein auf den Datenstrukturen des verwendeten Dateiformats. Im Gegensatz zu gängigen Verfahren sind keine zeitaufwendigen statistischen Analysen der Bilddaten notwendig.

Die Erfindung kann auch bei der forensischen Wiederherstellung von gelöschten Mediendaten eine wichtige Grundlage bilden. So kann beispielsweise eine Datenbank der deterministischen charakteristischen Fingerabdrücke von JPEG und Exif-Datenstrukturen von Kameramodellen und Bildverarbeitungssoftware als Vorwissen bei der Rekonstruktion oder zur Ersetzung verloren gegangener Kompressionsparameter eingesetzt werden. Dieses Vorgehen ist auch bei anderen Dateiformaten für Bilder beziehungsweise Audio- und Videodaten anwendbar.

Generell könnte man den Analyseansatz auf alle Arten komplexer Dateiformate übertragen wie beispielsweise auch für Word-, PDF-Dokumente oder komplexe Datenformate von Netzwerkpaketen beispielsweise im Mobilfunkbereich. So kann durch eine Analyse von Datenpaketen bei einer GSM-Kommunikation beispielsweise ein hierfür genutztes Handymodell identifiziert werden.

Diese erfindungsgemäße Authentikation von digitalen Multimediadaten erfolgt auf der Grundlage von gespeicherten Daten über die Originaldatenstrukturen verschiedener Aufzeichnungsformate, -Standards und Aufzeichnungsgeräte und -Typen verschiedener Hersteller und verschiedener Modelle innerhalb der Produktpalette eines Herstellers.

In einer Ausgestaltung der Erfindung ist vorgesehen, dass die zusätzlich gespeicherte Information ein Parameter eines Aufzeichnungsstandards der Multimediadatei ist.

Beispielsweise mit der eigentlichen Bildinformation eines Fotos werden Parameter wie der Kamera-Modellname, Filetyp, Filegröße, Filename, Softwareversion, Aufnahmedatum und - zeit, Informationen zur Kameraoptik, Kommentare und andere erzeugt und als Zusatzdaten gespeichert.

Diese Parameter ändern sich beispielsweise beim Vergleich zwischen zwei verschiedenen Datenformaten. Diese Parameter sind auch abhängig vom Hersteller eines Aufzeichnungsgerätes und auch vom Gerätetyp eines Herstellers und sind somit geeignet, als Herkunftsinformation einer Multimediadatei genutzt zu werden.

Die Erfindung wählt aus diesen Zusatzdaten eine oder mehrere Informationen aus, welche bei einem Vergleich mit einer zu untersuchenden Multimediadatei genutzt werden.

In einer Ausführung der Erfindung ist vorgesehen, dass die zusätzlich gespeicherte Information ein Parameter eines die Multimediadatei erstellten Gerätetyps ist.

Die gespeicherten Zusatzdaten können vom Hersteller eines Aufnahmegerätes, einem bestimmten Gerätetyp eines einzigen Herstellers und auch von der in diesem Gerät eingesetzten Softwarevariante abhängig sein und sich somit unterscheiden.

In einer anderen Ausgestaltung der Erfindung ist vorgesehen, dass die zusätzlich gespeicherte Information ein Parameter einer zur Erzeugung der Multimediadatei genutzten Software ist.

Eine Software, welche beispielsweise eine Tondatei aufzeichnet, speichert ebenfalls Zusatzdaten zur erstellten Multimediadatei ab, welche zum erfindungsgemäßen Vergleich genutzt werden können.

In einer Ausführung der Erfindung ist vorgesehen, dass die Merkmale in einer Datenbank zumindest mit einem Bezug zu einem Hersteller des die Multimediadatei erzeugenden Geräts oder der Software gespeichert werden und aus dieser auslesbar sind.

Zur Realisierung der Erfindung müssen Beispielaufnahmen erzeugt und zumindest die hierbei erzeugten Zusatzdaten in einer Datenbank mit einem Bezug beispielsweise auf den Hersteller und das Modell hinterlegt werden. Aus dieser Datenbank können die Merkmale für einen Vergleich ausgewählt und entnommen werden.

In einer besonderen Ausführung der Erfindung ist vorgesehen, dass die Multimediadaten Bilder, Videos oder Tonaufzeichnungen sind.

Die Authentikation unterliegt keiner Einschränkung auf Bilddaten. Das Verfahren kann auch auf Videodaten, Tonaufzeichnungen oder auch auf Datenpakete in einem bestimmten Kommunikationsprotokoll angewandt werden.

In einer weiteren Ausgestaltung der Erfindung ist vorgesehen, dass die Aufzeichnungsstandards JPEG, EXIF, PNG oder TIFF sind.

Auch besteht erfindungsgemäß keine Einschränkung auf eine oder mehrere Datenformate oder Standards. Allgemein können alle digitalen Multimediadaten verfahrensgemäß verarbeitet werden, welche Zusatzdaten abspeichern.

In einer anderen Ausführungsform der Erfindung ist vorgesehen, dass die Gerätetypen Fotoapparate, Camcorder, Videorekorder, Computer oder Handys sind.

Eine Einschränkung auf einen oder mehrere Gerätetypen oder Hersteller besteht ebenfalls nicht. Notwendig sind nur die oben beschriebenen Beispiel- oder Referenz-Informationen, welche in einer Datenbank abgespeichert sein müssen.

Das Verfahren ist weder auf eine bestimmte Multimediadatei noch auf ein bestimmtes Format zur Aufzeichnung festgelegt, sondern kann auf alle Dateien und Formate angewandt werden. Dies gilt für Aufnahmen im Bereich des visuell sichtbaren Lichtspektrums als auch des visuell nicht sichtbaren Spektrums und auch für Tonaufnahmen in einem für den Menschen nicht hörbaren Frequenzbereich.

Ebenso besteht keine Einschränkung bezüglich der zur Aufzeichnung einer Multimediadatei genutzten Geräte. Neben den genannten Geräten können auch Flachbettscanner bzw. Bildscanner allgemein, Geräte zur digitalen Audioaufzeichnung wie digitale Diktiergeräte, Mobiltelefon zur Audioaufzeichnung sowie zur Übertragung der Audioaufzeichnung über das Telefonnetz und andere als Geräte oder Gerätetypen zum Einsatz kommen.

Das Verfahren ist auch bei bildgebenden medizinischen Verfahren zur Authentitätsicherung anwendbar. Also wenn Ultraschall-, Röntgen-, CT- oder Kernspintomographieaufnahmen direkt als digitale Bildaufnahmen gespeichert werden. Ebenso bei Kopier- oder Faxgeräten, Luftbildaufnahmegeräten oder Satellitenfotografie. Auch Datei-Formate zum Streaming von Audio-, Video- und Bilddaten können ähnliche Spuren enthalten und ebenfalls mittels der hier vorgestellten Methode analysiert werden.

Die Erfindung soll nachfolgend anhand eines Ausführungsbeispiels näher erläutert werden. In den zugehörigen Zeichnungen zeigt
- Fig. 1: eine tabellarische Darstellung verschiedener Kameratypen und den von ihnen erzeugten und gespeicherten Zusatzdaten in sogenannten Marker-Segmenten,
- Fig. 2: eine tabellarische Darstellung verschiedener Bildverarbeitungsprogramme und den von ihnen erzeugten und gespeicherten Zusatzdaten in sogenannten Marker-Segmenten und
- Fig. 3: eine Darstellung einer Gegenüberstellung von ursprünglichen und veränderten Zusatzdaten, welche durch das vorliegende Verfahren erkannt werden können.

Die Erfindung nutzt hardware- und softwareabhängige Besonderheiten von Digitalkameras und Bildverarbeitungssoftware und basiert auf einer low-level Analyse komplexer Datenstrukturen.

Fast alle Digitalkameras erlauben die Speicherung digitaler Fotos im JPEG-Dateiformat. Der grundlegende Aufbau und die möglichen Elemente des JPEG-Dateiformats sind als Teil des JPEG-Kompressionsstandards definiert, wie er in Information technology - Digital compression and coding of continuoustone still images - Requirements and guidelines. ISO/IEC IS 10918-1, ITU-T Recommendation T.81. 1992 beschrieben ist.

Zusätzlich gibt es Möglichkeiten der Speicherung von Bilddaten in einem Datenformat mit geringerer Komplexität aber auch geringerer Funktionalität, beispielsweise in den Formaten JFIF oder JPEG/EXIF. Zu Einzelheiten bezüglich dieser Formate wird auf die Quellen E. Hamilton. JPEG File Interchange Format Version 1.02. C-Cube Microsystems. 1778 McCarthy Blvd., Milpitas, CA 95035, 1992 und JEITA CP-3451, Exchangeable imagefile format for digital still cameras: Exif Version 2.2. Japan Electronics und Information Technology Industries Association. 2002. verwiesen.

Die konkrete Implementierung des Dateiformats ist im JPEG-Standard nur grob skizziert und lässt Herstellern Raum für eigene Interpretationen. Die vorgeschlagene Methode nutzt diese Unterschiede in der Implementierung des JPEG Dateiformats in Digitalkameras und Bildverarbeitungssoftware und kann damit manipulierte Bilddateien erkennen.

Erfindungsgemäß werden folgende Aspekte analysiert:
- nicht alle Strukturen im Dateiformat sind zwingend notwendig (bei JPEG werden Strukturen Marker Segments genannt) und Unterschiede in der Existenz führen zu charakteristischen Mustern,
- die Häufigkeit des Auftretens einer Struktur führt zu charakteristischen Mustern (Digitalkameras speichern beispielsweise Quantisierungstabellen nur in einem JPEG Marker Segment, die meiste Bildverarbeitungssoftware verwendet aber getrennte Segmente für jede Tabelle),
- die Reihenfolge von Strukturen ist charakteristisch für einzelne Kameramodelle und Bildverarbeitungssoftware,
- Digitalkameras speichern zusätzliche Vorschaubilder in einer JPEG Datei, die wiederum auf die bereits genannten Charakteristiken untersucht werden können,
- Position und Anzahl von Vorschaubildern ergeben hersteller- oder modellspezifische Muster,
- innerhalb einer JPEG Datei befinden sich teilweise charakteristische Zusatzdaten am Ende des JPEG Datenstroms

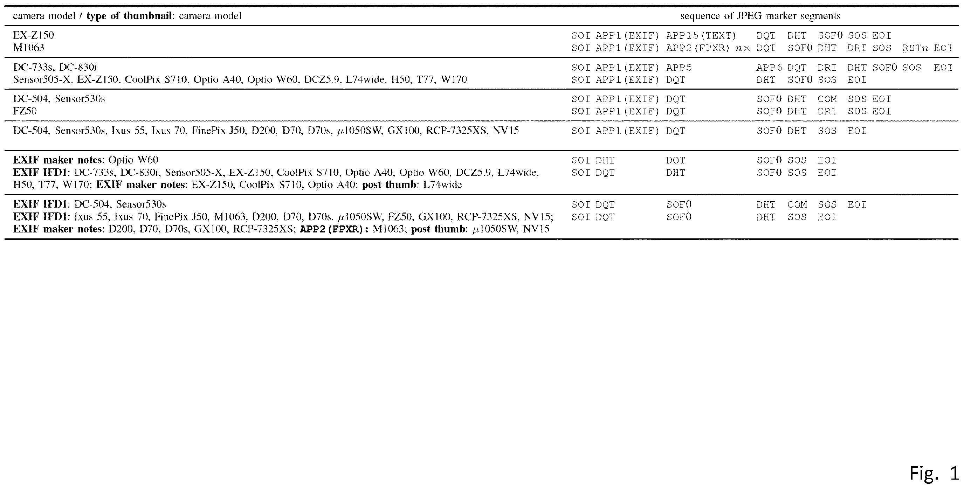

In der Figur 1 sind auszugsweise für mehrere Kameramodelle verschiedener Hersteller die vom jeweiligen Modell erzeugten und gespeicherten Zusatzdaten dargestellt. Untersucht wurden beispielsweise die Kameratypen Casio EX-Z150, Nikon S710, Practica DCZ5.9, Rico GX und Samsung L74.

Die Speicherung von JPEG-Dateien erfolgt üblicherweise in Segmente unterteilt. Hierbei stellt das JPEG Interchange Format (JIF) ein Oberformat dar, aus welchem sich andere Formate wie beispielsweise das bei Digitalkameras gebräuchliche JPEG/EXIF-Format ableiten.

Die Segmente sind nach einer festgelegten Spezifikation generell in folgender Form aufgebaut:
Ein FF xx s1 s2 leitet den Tag ein. FF ist ein hexadezimaler Wert und entspricht dezimal 255. Das xx bestimmt die Art des Tags. 256 * s1 + s2 gibt die Länge des Segmentes an.

Bei den in der Tabelle dargestellten Zusatzdaten kennzeichnet beispielsweise SOI den Beginn und EOI das Ende einer JPEG-Datei. Die zwischen diesen Segmenten gespeicherten Informationen wie beispielsweise APP1, APP15, DQT, DHT, SOF und SOS für den Eintrag zum Kameramodell EX-Z150 zeigen, dass diese sowohl vom Hersteller als auch vom Kameratyp abhängig sind.

In den Segmenten APP1(EXIF) können beispielsweise weitere Miniatur-Vorschaubilder abgespeichert werden, wie bei einigen Kameramodellen dargestellt ist.

Die Figur 1 zeigt die zum jeweiligen Kameramodell gespeicherten Segmente und ihre Position innerhalb der JPEG-Datei. Somit bestehen bereits bei diesen Zusatzdaten Unterschiede, welche als Merkmale des verfahrensgemäßen Vergleichs genutzt werden können.

Das vorliegende Verfahren sammelt diese Charakteristiken, um einen sogenannten Fingerabdruck für einzelne oder Gruppen von Kameramodellen zu erstellen.

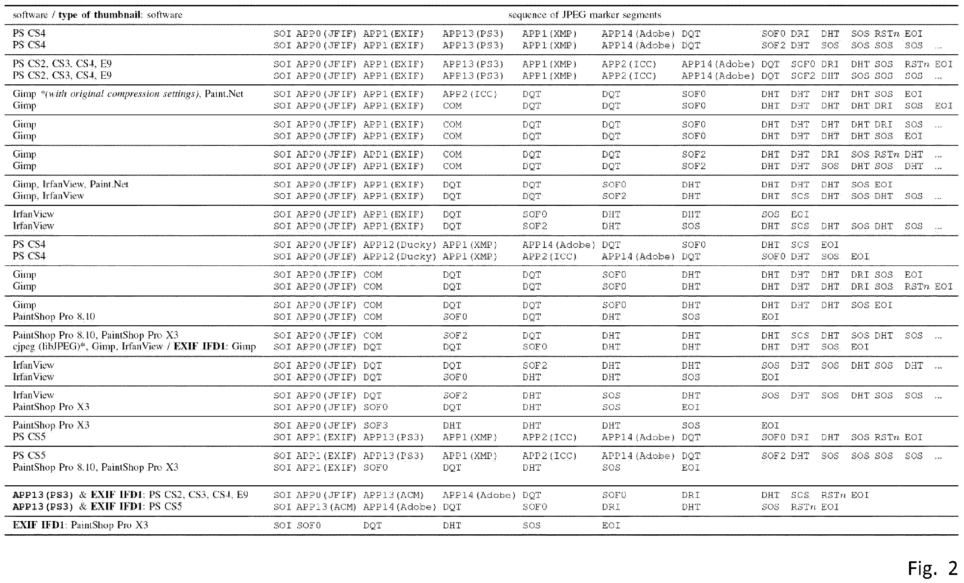

In der Figur 2 ist eine Zuordnung verschiedener Zusatzdaten zu mehreren Bildverarbeitungsprogrammen wie Gimp, IrfanView, PaintShop und anderen dargestellt. Auch hier ist die für eine JPEG-Datei üblicherweise gespeicherte Anzahl und Art der Segmente meist unterschiedlich. Gleiches gilt auch beim Abspeichern in den Unterformaten JFIF oder JPEG/EXIF.

Oft werden mehrere DQT- und DHT-Segmente zum Speichern von Tabellen angelegt. Eine Besonderheit beim Programm Photoshop besteht im Einfügen mehrerer herstellerspezifischer APP-Segmente.

Wird ein, mit einer in Figur 1 gezeigten Kameras, aufgenommenes Bild mittels einer Bildverarbeitungssoftware manipuliert oder erneut in einem JPEG-Dateiformat abgespeichert, so geht dieser Fingerabdruck verloren oder wird in mindestens einem Eintrag verändert und das Bild kann als nachbearbeitet identifiziert werden.

Ähnlich wie die JPEG-Dateistruktur weist auch das Exif-Metadatenformat charakteristische Muster auf. Das Exif-Metadatenformat wird von allen Herstellern implementiert um Zusatzdaten wie Aufnahmezeitpunkt, -ort oder Kameraeinstellungen im JPEG-Dateiformat mit abzulegen. Die vorgeschlagene Methode wurde deshalb für das Exif-Metadatenformat angepasst und es werden folgende Charakteristiken für die Erstellung eines Fingerabdrucks ausgewertet:
- die Byte-Reihenfolge ("byte order") der gespeicherten Metadaten hängt von der Hardwarearchitektur einer Digitalkamera ab und unterscheidet sich zwischen Geräten und Software,
- die Reihenfolge, Existenz und Häufigkeit von Strukturen des EXIF Metadatenformats unterscheiden sich zwischen Kameramodellen und Software,
- der Speicherort der Daten an unterschiedlichen Positionen innerhalb einer Exif-Struktur,
- die Kodierung gespeicherter Werte unterscheidet sich (Hersteller speichern die gleiche gebrochene Zahl unterschiedlich ab, z.B. 200/10 = 20/1).

Werden Exif-Metadaten an einem Rechner mit dem Editor "ExifTool" nachträglich verändert, so ändert sich auch hier die Struktur der Daten, auch wenn sich die Änderungen nur auf einen einzelnen Eintrag der Metadaten beschränken.

Ähnlich führt das erneute Abspeichern eines Bildes mit einer Bildverarbeitungssoftware meist auch zu einer Veränderung des charakteristischen Fingerabdrucks der Metadaten. Erstellung und Vergleich des Fingerabdrucks von Metadaten kann somit zusätzlich zur Analyse der JPEG-Dateistruktur einen Hinweis auf die Authentizität liefern.

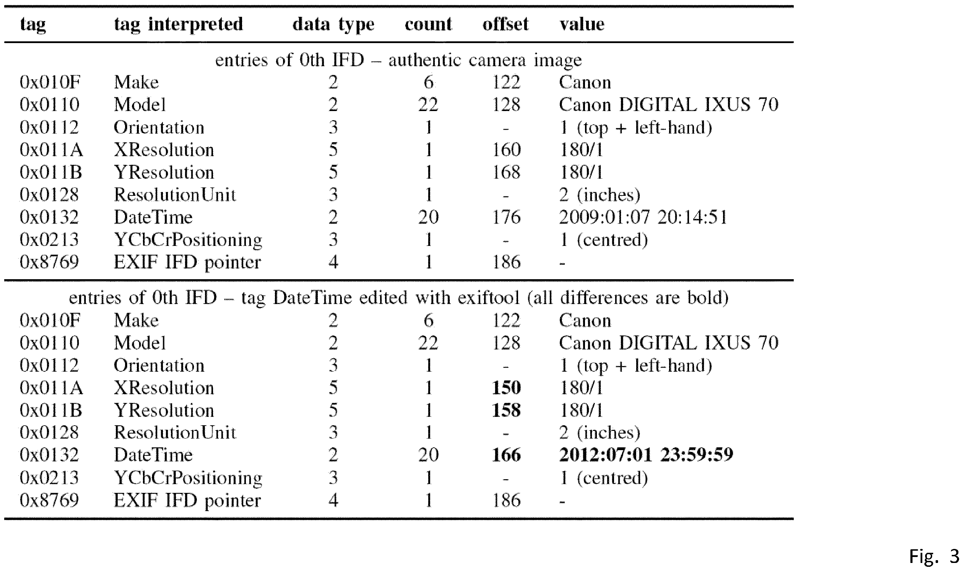

Ein Beispiel einer derartigen Veränderung der Struktur der Daten bzw. der Inhalte ist in der Figur 3 gezeigt. Ein ausgewählter Teil der Zusatzdaten einer Canon-Kamera ist im oberen Teil der Figur 3 in der Originalversion dargestellt.

Eine Bearbeitung der Datei mit "ExifTool" hat zur Folge, dass einige Merkmale verändert wurden, wie im unteren Teil der Figur 3 dargestellt ist. So wurde in diesem Beispiel das Datum von 2009:01:07 in 2012:07:01 die Zeit von 20:14:51 in 23:59:59 und der zugehörige Offsetwert von 176 in 166 verändert. Ein derartiger Offsetwert für das Datum ist allerdings für das jeweils betrachtete Kameramodell charakteristisch und unterscheidet sich normalerweise nicht zwischen Bildern, die mit diesem Modell aufgezeichnet wurden.

Außerdem sind bei der nachträglich bearbeiteten Aufnahme auch die Werte für den Offset der X-Auflösung von 160 in 150 und für die Y-Auflösung von 168 in 158 verändert worden. Ein Vergleich dieser Merkmale durch das Verfahren zeigt, dass das Foto nachträglich verändert wurde und somit nicht die Originalaufnahme ist.

Das Verfahren kann auch auf Bilderstellungssoftware oder Bildverarbeitungssoftware angewendet werden und einen charakteristischen Fingerabdruck zur Erkennung der verwendeten Software bestimmen.

Prinzipiell ist das Verfahren nicht auf digitale Bilder beschränkt und kann auch bei anderen Medien eingesetzt werden. Das erfindungsgemäße Verfahren ist daher beispielsweise auch für MPEG-4 Videos, die mit Handys aufgenommen wurden, einsetzbar. Ebenso liegt keine Beschränkung auf die oben genannten Formate JPEG oder JPEG/EXIF vor. Natürlich können auf Bildformate wie PNG, TIFF und andere verwendet werden.

## Patentansprüche

1. Verfahren zur Authentikation digitaler Multimediadaten, bei welchem ein Vergleich der Multimediadaten mit einem vorgegebenen Merkmal erfolgt, wobei das Merkmal für den Vergleich aus einer bei der Erzeugung der Multimediadatei zusätzlich gespeicherten Information abgeleitet wird und wobei die Authentikation unter Verwendung dieses abgeleiteten Merkmals erfolgt,
**dadurch gekennzeichnet, dass** die
Authentikation derart durchgeführt wird, dass eine Prüfung der Existenz, der Häufigkeit des Auftretens, der Reihenfolge sowie des Speicherorts innerhalb der zusätzlich gespeicherten Information bezüglich des vorgegebenen Merkmals erfolgt.

2. Verfahren nach Anspruch 1, **dadurch**
**gekennzeichnet, dass** die zusätzlich gespeicherte Information ein Parameter eines Aufzeichnungsstandards der Multimediadatei ist.

3. Verfahren nach Anspruch 1, **dadurch**
**gekennzeichnet, dass** die zusätzlich gespeicherte Information ein Parameter eines die Multimediadatei erstellenden Gerätetyps ist.

4. Verfahren nach Anspruch 1, **dadurch**
**gekennzeichnet, dass** die zusätzlich gespeicherte Information ein Parameter einer zur Erzeugung der Multimediadatei genutzten Software ist.

5. Verfahren nach einem der vorhergehenden Ansprüche,
**dadurch gekennzeichnet, dass** die Merkmale in einer Datenbank zumindest mit einem Bezug zu einem Hersteller des die Multimediadatei erzeugenden Geräts oder der Software gespeichert werden und aus dieser auslesbar sind.

6. Verfahren nach einem der vorhergehenden Ansprüche,
**dadurch gekennzeichnet, dass** die
Multimediadaten Bilder, Videos oder Tonaufzeichnungen sind.

7. Verfahren nach Anspruch 2, **dadurch**
**gekennzeichnet, dass** die Aufzeichnungsstandards JPEG, EXIF, PNG oder TIFF sind.

8. Verfahren nach Anspruch 3, **dadurch**
**gekennzeichnet, dass** die Gerätetypen Fotoapparate, Camcorder, Videorekorder, Computer oder Handys sind.

## Claims

1. Method for authenticating digital multimedia data, in which a comparison of the multimedia data with a prescribed feature takes place, wherein the feature for the comparison is derived from information additionally stored during the production of the multimedia file and wherein the authentication takes place using this derived feature, **characterized in that** the authentication is performed such that a check on the existence, the frequency of occurrence, the order and the memory location takes place within the additionally stored information for the prescribed feature.

2. Method according to Claim 1, **characterized in that** the additionally stored information is a parameter of a recording standard of the multimedia file.

3. Method according to Claim 1, **characterized in that** the additionally stored information is a parameter of a device type creating the multimedia file.

4. Method according to Claim 1, **characterized in that** the additionally stored information is a parameter of a piece of software used to produce the multimedia file.

5. Method according to one of the preceding claims, **characterized in that** the features are stored in a database at least with a reference to a manufacturer of the device producing the multimedia file or of the software and are readable from said database.

6. Method according to one of the preceding claims, **characterized in that** the multimedia data are images, videos or sound recordings.

7. Method according to Claim 2, **characterized in that** the recording standards are JPEG, EXIF, PNG or TIFF.

8. Method according to Claim 3, **characterized in that** the device types are cameras, camcorders, video recorders, computers or mobile phones.

## Revendications

1. Procédé d'authentification de données multimédias numériques, avec lequel une comparaison des données multimédias avec une caractéristique prédéfinie est effectuée, la caractéristique pour la comparaison étant dérivée d'une information enregistrée en plus lors de la génération du fichier multimédia et l'authentification étant effectuée en utilisant cette caractéristique dérivée, **caractérisé en ce que** l'authentification est réalisée de telle sorte qu'un contrôle de l'existence, de la fréquence de survenance, de l'ordre ainsi que du lieu d'enregistrement à l'intérieur de l'information enregistrée en plus étant effectué concernant la caractéristique prédéfinie.

2. Procédé selon la revendication 1, **caractérisé en ce que** l'information enregistrée en plus est un paramètre d'une norme d'enregistrement du fichier multimédia.

3. Procédé selon la revendication 1, **caractérisé en ce que** l'information enregistrée en plus est un paramètre d'un type d'appareil créé le fichier multimédia.

4. Procédé selon la revendication 1, **caractérisé en ce que** l'information enregistrée en plus est un paramètre d'un logiciel utilisé pour la génération du fichier multimédia.

5. Procédé selon l'une des revendications précédentes, **caractérisé en ce que** les caractéristiques sont enregistrées dans une base de données au moins avec une référence à un fabricant de l'appareil qui génère le fichier multimédia ou du logiciel et peuvent être lues à partir de celle-ci.

6. Procédé selon l'une des revendications précédentes, **caractérisé en ce que** les données multimédias sont des images, des vidéos ou des enregistrements sonores.

7. Procédé selon la revendication 2, **caractérisé en ce que** les normes d'enregistrement sont JPEG, EXIF, PNG ou TIFF.

8. Procédé selon la revendication 3, **caractérisé en ce que** les types d'appareils sont des appareils photographiques, des caméscopes, des enregistreurs vidéo, des ordinateurs ou des téléphones mobiles.
